(19) Europäisches Patentamt
European Patent Office
Office européen des brevets

(11) **EP 2 557 938 B1**

(12) **EUROPEAN PATENT SPECIFICATION**

(45) Date of publication and mention
of the grant of the patent:
**14.10.2020 Bulletin 2020/42**

(51) Int Cl.:
*A23K 20/189* (2016.01)     *A23K 40/30* (2016.01)
*A23K 50/30* (2016.01)     *A23K 50/60* (2016.01)
*A23K 50/75* (2016.01)

(21) Application number: **11856630.6**

(22) Date of filing: **17.01.2011**

(86) International application number:
**PCT/US2011/021474**

(87) International publication number:
**WO 2012/169997 (13.12.2012 Gazette 2012/50)**

(54) **PROTECTED ALPHA-AMYLASE**

GESCHÜTZTE ALPHA-AMYLASE

ALPHA-AMYLASE PROTÉGÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.01.2010 US 295444 P**

(43) Date of publication of application:
**20.02.2013 Bulletin 2013/08**

(73) Proprietor: **Kemin Industries (Zhuhai) Co. Ltd.
Sanzao
Zhuhai 519040 (CN)**

(72) Inventors:
• **DUAN, Zhiyong**
Zhuhai, Guangdong 51900 (CN)
• **LIU, Yongcai**
Liuzhou, Guangxi 545201 (CN)
• **LAO, Ye**
Guangzhou, Guangdong 610641 (CN)
• **CHEN, Dong**
Beiliu City, Guangxi 537400 (CN)
• **MA, Jun**
Nanning City, Guangxi (CN)

(74) Representative: **Evans, Jacqueline Gail Victoria
Marches Intellectual Property Limited
Wyastone Business Park
Wyastone Leys
Ganarew
Monmouth NP25 3SR (GB)**

(56) References cited:

EP-A2- 0 286 773     CA-A1- 2 263 703
CN-A- 1 943 783     JP-A- S63 258 809
KR-B1- 100 804 096     US-A- 2 702 264
US-A- 5 750 104     US-A1- 2001 001 668
US-A1- 2006 127 484     US-A1- 2007 157 329
US-B2- 6 270 798

• SCOCCA SARAH ET AL:
"Alginate/polymethacrylate copolymer
microparticles for the intestinal delivery of
enzymes", CURRENT DRUG DELIVERY,
BENTHAM SCIENCE PUBLISHERS, HILVERSUM,
NL, vol. 4, no. 2, 1 April 2007 (2007-04-01), pages
103-108, XP008165061, ISSN: 1567-2018, DOI:
10.2174/156720107780362311
• OBEIDAT ET AL.: 'Sustained Release Tablets
Containing Soluble
Polymethacrytates:Comparison with Tableted
Polymethacrylate IPEC Polymers.' AAPS
PHARMSCITECH vol. 11, no. 1, March 2010, pages
54 - 63
• YUAN ET AL.: 'The Effects of Alternating
Combinations of an Enteric Coating and HPMC
as Inner and Outer Coatings on the Performance
of Coated Aspirin Tablets.' REPRINTED FROM
PHARMACEUTICAL TECHNOLOGY November
2003, pages 1 - 8
• Quiding ET AL: "Saliva-resistant coating of
tablets prevents oral release of penicillin: plasma
but not saliva equivalence.", European Journal
of Clinical Pharmacology, vol. 54, no. 9-10, 1
January 1998 (1998-01-01), pages 749-752,
XP55129202, ISSN: 0031-6970

**Description**

Background of the Invention

This application claims priority to United States Patent Application Serial No. 61/295,444, filed January 15, 2010.

The present invention relates generally to enzymes for improving the digestibility of feed and, more particularly, to an $\alpha$-amylase that is protected against inactivation by acid or heat.

Dietary starch, which is the main energy source for animals, is degraded into glucose by endogenous amylase in the mouth cavity and in the small intestine; it is the glucose that supplies the animal with energy. However, the shortage of endogenous amylase in animals, especially in young animals, limits the utilization of starch and decreases the nutritional potential of feedstuffs. Exogenous amylase has been used for decades to increase the digestibility of starch and improve the growth performance of animals.

The mouth cavity and the small intestine are the sites at which starch is digested. In a pH neutral environment, amylase in salivary secretions and pancreatin degrades starch into monosaccharides, which are then absorbed by the small intestine and metabolized to release energy. Feed generally passes the mouth cavity and the esophagus quickly, thus only low levels of starch digestion occurs here. On the contrary, the small intestine, where the environment is much more aqueous and the residence time is much longer, is the most important site for starch degradation. Therefore, for an exogenous amylase to be efficacious it would need to perform well in the small intestine. In order to achieve this, the exogenous amylase would need to be resistant to the low pH of the stomach so that it remains active when entering the small intestine.

Currently there are no commercial bacteria-sourced $\alpha$-amylases that are acid resistant, including Refined™ $\alpha$-amylase (Jiangmen China) and BAN 800® (Novozymes). These acid sensitive a-amylases are irreversibly inactivated by stomach acid before reaching the small intestine where starch degradation takes place. Development of an acid resistant $\alpha$-amylase to maximize the effectiveness of exogenous $\alpha$-amylase would fill a need in the marketplace.

Coated $\alpha$-amylase compositions having a time-release coating and a bleach-neutralising coating are described in EP 0286773A. The time-release coating is designed to delay the release o the bleach-neutralising substance and the enzyme so that a bleach used in combination with the formulation can perform its cleansing function before it is deactivated by the bleach-neutralising substance. Pancreatin cores provided with a gastric dissolvable coating are described in CN 1943783. CA 2263703 describes coating pancreatin granules with a coating solution to protect the pancreatin against the pH conditions of tableting.

Skin-washing compositions comprising an enzyme layer formed on a seed and multiple coating layers formed on the enzyme layer are described in KR100804096B.

Alginate/polymethacrylate copolymer microparticles for the intestinal delivery of enzymes are described by Scocca et. al in Current Drug Delivery, 2007, 4, 103-108.

Summary of the Invention

The present invention provides a protected $\alpha$-amylase animal feed ingredient resistant to release of the $\alpha$-amylase in the stomach environment of a monogastric animal and susceptible to release of the $\alpha$-amylase in the enteric environment, comprising:

(a) a core comprising $\alpha$ -amylase;
(b) a first coating comprising from 50% to 85% of a pH-sensitive enteric polymer and from 15% to 50% of excipients; and
(c) a second coating comprising from 50% to 85% of a slow-release polymer and from 15% to 50% of excipients .

The protected enzyme is produced from coating normal $\alpha$-amylase with controlled-release materials. Two mechanisms are used in the protected product. A polymer with one or more carboxyl groups was used in the coating. This material dissolves only at pH over 5.0 and thus provides pH-controlled release. To control the release in a time-dependent manner, methacrylic copolymer and PEG was also used.

The enzyme product claimed in this invention uses the encapsulation technology to provide resistance to the acidic environment of the stomach and is unreleased in the stomach environment and released in the enteric environment.

The enzyme product claimed in this invention uses three different mechanisms to contribute to the tightly-controlled release.

The enzyme product claimed in this invention can be applied, but not restricted, to improve digestibility in monogastric animals.

The enzyme product claimed in this invention can be applied, but not restricted, to compound feed and human dietary supplement.

The enzyme product claimed in this invention can be applied, but not restricted, with normal unencapsulated alpha-amylases at different ratios for different purposes.

The enzyme product claimed in this invention can be applied, but not restricted, to rations for poultry, swine and other monogastric animals to improve starch digestion.

The preferred dosage of this enzyme product is between 250-1000g/ton. In a preferred embodiment the final application of product is between 150 and 500 units of enzyme activity for each ton of finished feed.

Brief Description of the Figures

Fig. 1 is a chart of the procedure used to produce the enzyme products of the present invention.

Fig. 2 is a graph of the releasing curve of the protected a-amylase of the present invention in an acidic environment, a neutral environment and a neutral environment with the presence of lipase and pancreatin.

Fig. 3 is a graph of the comparison of the effects of Refined™ $\alpha$-amylase and the protected $\alpha$-amylase of the present invention on the reducing sugar released from corn meal.

Fig. 4 is a graph of the effects of protected $\alpha$-amylase supplement on the final body weight of broiler chicken (A,B,C means different letters within the column differ, $p<0.05$; a,b means different letters within the column differ significantly, $p<0.01$).

Fig. 5 is a graph of the effects of protected $\alpha$-amylase supplement on ADFI of different growth phase of broiler chicken

Fig. 6 is a graph of the effects of protected $\alpha$-amylase supplement on ADG of different growth phase of broiler chicken (A,B means different letters within the column differ, $p<0.05$; a,b means different letters within the column differ significantly, $p<0.01$)

Fig. 7 is a graph of the effects of protected $\alpha$-amylase supplement on FCR of different growth phase of broiler chicken (A,B,C means different letters within the column differ, $p<0.05$; a,b means different letters within the column differ significantly, $p<0.01$)

Fig. 8 is a graph of the effects of protected $\alpha$-amylase supplement on nutrients metabolic availability of broiler chicken (A,B,C means different letters within the column differ, $p<0.05$; a,b means different letters within the column differ significantly, $p<0.01$).

Detailed Description of Preferred Embodiments

As used herein, $\alpha$-amylase includes any composition having enzymatic activity in degrading starch having alpha-bond or linkages. The $\alpha$-amylase core or the present invention may include excipients, including microcrystalline cellulose, talc powder, calcium stearate, carboxymethylcellulose sodium, hydroxypropyl methylcellulose, poly(ethylene glycol), glycerol, and water. The core preferably contains between 50% and 85% $\alpha$-amylase and between 50% and 15% one or more excipients and any composition within that range.

As used herein, a pH-sensitive polymer is a polymer that changes its characteristics in response to changes in pH. Preferred polymers are enteric polymers which are relatively more soluble in the less acidic environment of the intestine and relatively less soluble in the more acidic environment of the stomach.

An enteric coating may be an essentially conventional coating material, for example enteric polymers such as cellulose acetate phthalate, cellulose acetate succinate, methylcellulose phthalate, ethylhydroxycellulose phthalate, polymethylacrylate, polyvinylacetatephthalate, polyvinylbutyrate acetate, vinyl acetate-maleic anhydride copolymer, styrene-maleic mono-ester copolymer, methyl acrylate-methacrylic acid copolymer, methacrylate-methacrylic acid-octyl acrylate copolymer, etc. These may be used either alone or in combination, or together with other polymers than those mentioned above. The enteric coating may also include excipients, such as alkyl cellulose derivatives such as ethyl cellulose, crosslinked polymers such as styrene-divinylbenzene copolymer, polysaccharides having hydroxyl groups such as dextran, cellulose derivatives which are treated with bifunctional crosslinking agents such as epichlorohydrin, dichlorohydrin, 1, 2-, 3, 4-diepoxybutane, etc., talc powder, calcium stearate, PEG 6000, triethyl citrate, and water. The enteric coating may also include starch and/or dextrin.

A pH-sensitive polymer coating of the present invention contains between 50% and 85% of the pH-sensitive polymer and between 50% and 15% of excipients, including any composition within the stated range.

As used herein, slow-release polymers include polymethylacrylate, methacrylic acid copolymer type C, hydroxymethyl cellulose,, hydroxypropylmethyl cellulose, methylacrylate-methyl methacrylate, polyvinyl chloride, hydrophilic polymers such as cellulose derivatives, ethyl cellulose or fatty compounds including carnauba wax. These may be used either alone or in combination, or together with other polymers than those mentioned above. The slow-release polymer coating may also include excipients, such as alkyl cellulose derivatives such as ethyl cellulose, crosslinked polymers such as styrene-divinylbenzene copolymer, polysaccharides having hydroxyl groups such as dextran, cellulose derivatives which are treated with bifunctional crosslinking agents such as epichlorohydrin, dichlorohydrin, 1, 2-, 3, 4-diepoxybutane, etc., talc powder, calcium stearate, PEG 6000, triethyl citrate, and water. The slow-release polymer coating may also include starch and/or dextrin.

A slow-release polymer coating of the present invention contains between 50% and 85% of the slow-release polymer and between 50% and 15% of excipients, including any composition within the stated range.

EXAMPLE 1

Protected $\alpha$-amylase was prepared as the formula presented in Table 1.

Table 1. Formula of Protected $\alpha$-amylase

| Components | Weight, g |
|---|---|
| Core | |
| $\alpha$-amylase | 650 |
| Calcium sterate | 65 |
| Wetting agent/binding agent solution | |
| 10% w/w PEG 6000/Water | 350 |
| Enteric Coating Solution | |
| Enteric Polymethacrylate | 350 |
| Triethyl citrate | 11 |
| Talc powder | 25 |
| Water | 350 |
| Stomach Disintegrative Coating Solution | |
| Stomach Distintergrative Polymethacrylate | 280 |
| Low Viscosity Hydroxypropyl Methyl Cellulose | 11 |
| Talc Powder | 14 |
| Water | 280 |

EXAMPLE 2

To develop a stomach-bypass $\alpha$-amylase and evaluate the product, four parameters were measured to evaluate the protected amylase: 1) resistance in acidic pH and effective release in neutral pH by in vitro tests, 2) a two-step sugar-release assay to simulate the digestion in stomach and small intestine, 3) a three-step sugar-release assay to simulate digestion in the mouth cavity and esophagus, stomach, and small intestine, and 4) thermostability.

MATERIALS AND METHODS

Enzymes. Refined™ $\alpha$-amylase (from *Bacillus subtilis* available from Jiangmen, China) and BAN 800™ ((from *Bacillus amyloliquefaciens,* available from Novozymes) were obtained. Both enzymes were in powder form.

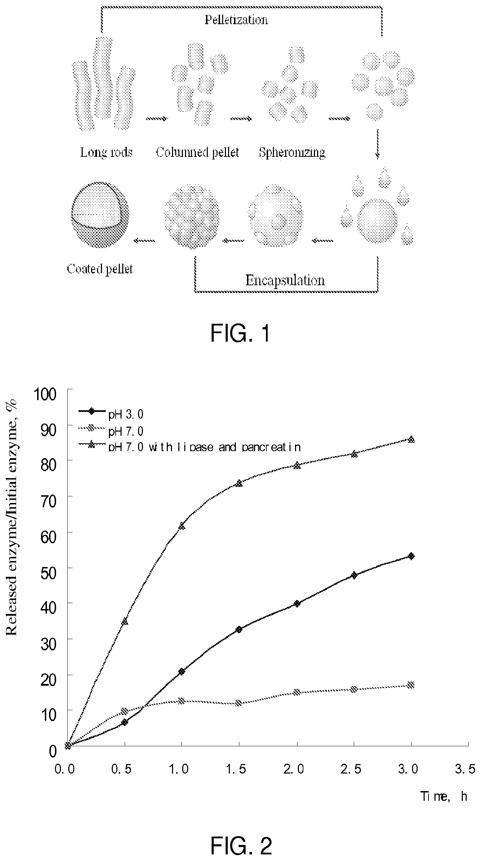

The protected $\alpha$-amylase contains approximate 30% (w/w) of Refined™ $\alpha$-amylase. Alpha-amylase was mixed with polymers, including adhesives and lubricants, to homogeneity. All the coating materials are in the positive list of feed ingredients published by China Department of Agriculture. The mixture was extruded into long rods which were then cut into columned pellets. The columned pellets were sphericalized into polished round micro-pellets and encapsulated with pH-sensitive polymers, which are stable in low pH but dissolve in neutral pH. The coat formed a semi-permeable membrane around the micro-pellets. The digestive juices can slowly enter the pellet through the semi-permeable membrane and thus release the $\alpha$-amylase. The procedure is shown in Fig. 1.

Three kinds of Kemzyme® Dry (Kemin Industries, Inc.) preparations were used in this trial. One was the current Kemzyme® Dry using Refined™ $\alpha$-amylase. The second preparation was prepared by replacing the Refined™ $\alpha$-amylase in Kemzyme® Dry with the protected $\alpha$-amylase at equal weight. The third preparation was prepared by replacing Refined™ $\alpha$-amylase in Kemzyme® Dry with the protected $\alpha$-amylase at equal enzymatic activity. The enzymatic activities of the three preparations are listed in Table 2.

Table 2. Enzymatic activities of three Kemzyme® Dry preparations, U/g

|  | Kemzyme® I | Kemzyme® II | Kemzyme® III |
|---|---|---|---|
| Neutral protease | 250 | 250 | 250 |
| Xylanase | 1,200 | 1,200 | 1,200 |
| Cellulase | 250 | 250 | 250 |
| Beta-glucanase | 150 | 150 | 150 |
| Pectinase | 300 | 300 | 300 |
| Alpha-amylase |  |  |  |
| Refined™ α-amylase | 300 | -- | -- |
| Protected α-amylase | -- | 70 | 300 |

Substrates. Corn meal and a lab-prepared compound feed were used in this trial. The compound feed consisted of 50% corn meal, 10% wheat meal and 40% soybean meal.

Solutions. Phosphate buffers were utilized for determining acid resistance, time course of release of α-amylase from micropellets, and the release of reducing sugar by enzymes. The 1 M phosphate buffer stock solution was prepared by dissolving 200 g of $NaH_2PO_4$ and 120 g of $K_2HPO_4$ in 1000 ml deionized water and bringing the volume to 2 L with deionized water. The 0.01 M Phosphate buffer (pH 6.8) was prepared by diluting 10 ml of phosphate buffer stock solution with approximately 800 ml deionized water, adjusting the pH to 6.8 with 2 M NaOH, and bringing the volume to 1 L with deionized water. The 0.05 M phosphate buffer (pH 2.0) was prepared by diluting 50 ml of phosphate buffer stock solution with approximately 800 ml deionized water, adjusting the pH to 2.0 with 2 M HCl, and bringing the volume to 1 L with deionized water. The 0.5 M phosphate buffer (pH 7.0) was prepared by diluting 500 ml of phosphate buffer stock solution with approximately 400 ml deionized water, adjusting the pH to 7.0 with 10 M NaOH, and bringing the volume to 1 L with deionized water.

Determination of the Enzymatic Activities. The activity of α-amylase was determined using Phadebas tablets as the substrate. Phadebas tablets are a cross-linked insoluble blue-colored starch polymer, which is mixed with bovine serum albumin and a buffer substance. After suspension in water, the starch is hydrolyzed by the alpha amylase, giving soluble blue fragments. The absorbance of the resulting blue solution, measured at 620 nm, is a function of the alpha amylase activity. Beta-glucanase, cellulase, protease, xylanase and pectinase were determined by assays substantially as described in United States Patent Application 2009/0004327, which is incorporated herein in its entirety by this reference.

Thermostability. Ten grams of dry enzymes were put into each beaker and treated by steam at 80 or 90°C for 5 or 10 min. After treatments, the beakers were cooled down to room temperature and the activities before and after treatments were measured using the Phadebas tablet method. The ratio of the residual activity to the initial activity was calculated to reflect the thermal stability of enzymes.

Acid Stability. Ten grams of Refined™ α-amylase and BAN 800™ were treated with 100 ml of phosphate buffer (pH 3.0) in beaker for 15 and 30 minutes, respectively. The solution was adjusted back to pH 7.0 and the residual and the original enzymatic activities were measured using the Phadebas tablet method. The ratio of the residue activities to the original activities was used to reflect the acid stability.

The protected α-amylase was treated with phosphate buffer (pH 3.0) for 1 hour and then treated with lipase (25 U/L of buffer, Leveking Co.) and pancreatin (2.5 g/L) in pH 7.0 for 2 hours. The remaining activities in the buffer were measured using the Phadebas tablet method. The original enzymatic activities were measured by grinding the micro-pellets and then tested using the Phadebas tablet method. The ratio of the residual activity to the original activity was used to reflect the overall efficiency which is composed of resistance to acidic pH and the efficiency of enzyme release at neutral pH.

Releasing Kinetics of the Protected a-Amylase. Releasing kinetics of protected α-amylase in neutral pH was tested by incubating 10 g of protected α-amylase in 100 ml of phosphate buffer (pH 7.0) for 3 hours. One milliliter was sampled every 30 minutes and the α-amylase activity was determined. The ratio of the released activity to the initial activity was calculated. For measuring the releasing kinetics in neutral pH and in the presence of lipase and pancreatin, the conditions were the same except that lipase (25 U/L) and pancreatin (2.5 g/L) were included in the incubation.

For the treatment with phosphate buffer at pH 3.0, 10 g of protected α-amylase was incubated in beaker with 100 ml of phosphoric buffer for 0.5, 1.0, 1.5, 2.0, 2.5 and 3.0 hours. The unreleased pellets were collected, ground and the remaining activity in pellets was determined. The ratio of released activity to the initial activity was calculated as:

$$\text{Released ratio } (\%) = 100 \times (A - A_t)/A,$$

where A and At are the initial activity and the remaining activity in pellets at t time, respectively.

*In Vitro* Test Methods. Experiments were conducted to evaluate α-amylase protection in the environments of the stomach and small intestine (two-step), and the mouth cavity and the esophagus plus the stomach and small intestine (three-step). In the first round, using the two-step method with corn meal and compound feed as substrates, protected α-amylase and unprotected Refined™ α-amylase preparations were evaluated based on their ability to release reducing sugars. In the second round, three Kemzyme® preparations (Table 1) were tested for the release of reducing sugars using the two-step method with corn meal and compound feed as substrates. In the third round, the three-step method was employed to determine the release of reducing sugar from corn meal by the Refined™ α-amylase and the protected α-amylase. The enzyme dosage used in all the in vitro tests was 10 g/kg of substrate, which was 10 times the recommended dosage of Kemzyme® Dry.

In the two-step method, 10 g of substrate was incubated in 50 ml of 1.5 g/L pepsin solution (1.5 g pepsin was dissolved into 1 L of 0.05 M phosphate buffer, pH 2.0) at 37 °C for 1 h. Then 100 ml of 0.5 M phosphoric buffer (pH 7.0) was added and incubated at 37 °C for 4 h. Reducing sugar content in the buffer was determined according to the standard Somogyi-Nelson assay. In the three-step method, 10 g of substrate was incubated in 25 ml of 0.01 M phosphoric buffer (pH 6.8) at 37 °C for 5 min. Then 50 ml of 1.5 g/L pepsin solution was added and the substrate was incubated at 37 °C for 1 h. Finally, 100 ml of 0.5 M phosphoric buffer (pH 7.0) was added and the incubation was continued for an additional 4 h. The reducing sugar content was measured at the end of incubation.

Data Analysis. The data were analyzed by ANOVA using the statistical software SAS (v6.12, 1996). Multiple comparison tests used Duncan's multiple-range test. Significance was declared when $p < 0.05$ and high significance was declared when $p < 0.01$.

RESULTS

Acid Stability

Evaluation for acid stability of the Refined™ α-amylase or BAN 800™ α-amylase is summarized in Table 3. Both enzymes were treated with low pH for 15 or 30 minutes and then with neutral pH in order to measure the remaining activity. Neither the Refined™ α-amylase nor the BAN 800™ α-amylase was acid-resistant. Little to no α-amylase survived when treated at pH 3 for 15 minutes, showing that the α-amylase in these two sources was irreversibly inactivated by the low pH.

Table 3. The initial and remaining activities of Refined™ α-amylase and BAN 800™ by acid treatment

| Enzymes | Initial Activity (U/g) | Remaining Activity | | | |
| | | pH 3, 15 min then pH 7 | | pH 3, 30 min then pH 7 | |
| | | (U/g) | (%) | (U/g) | (%) |
| Refined™ α-amylase | 100,000 | 4,000 | 4 | 2,000 | 2 |
| BAN 800™ | 70,000 | 3,500 | 5 | 1,500 | 2 |

To evaluate the acid stability of the protected α-amylase, two factors must be taken into consideration. The first factor is the protection of amylase in the acidic environment, and the second factor is the release of amylase in neutral pH. These two factors cannot be separated, because the leaked enzyme in the acidic pH was immediately inactivated. Therefore, firstly we tested the releasing kinetics in acidic and neutral pH. In contrast to the unprotected amylase, the protected α-amylase was very stable after treatment by low pH, only approximate 15 % of amylase was released in 3 hours (Fig. 2), suggesting that there was very little leakage at acidic pH and very effective release at neutral pH.

When treated with pH 7.0 phosphate buffer for 3 hours, around 55 % of the α-amylase was released into buffer smoothly at the rate of 10% of initial activity per half hour (R2=0.98) (Fig. 2). This suggests that the protected α-amylase is both pH-controlled and time-controlled, both of which are important for passing acidic pH and releasing gradually in neutral pH. The reason that only 55% of the coated enzyme was released is that the coating materials contain hydrogenated vegetable oil, which needs lipase to degrade. Since in this assay no pancreatin was included, the releasing efficiency was only. Therefore, another test was performed using the same condition but with the presence of lipase and pancreatin. Over 60 % enzyme was released in 1 hour and approximately 85 % was released in 3 hours (Fig. 2), suggesting that the protected α-amylase is not only time-controlled and pH-controlled, but also lipase/pancreatin-dependent, all of which are important for the effective protection and release of α-amylase in the small intestine *in vivo.*

In order to examine the behavior of the protected α-amylase in conditions closer to the in vivo conditions, we measured the total released activity after 1 hour of acidic treatment and 2 hours of treatment with lipase and pancreatin at neutral pH. Consistent with the result of releasing curve, $\alpha$-amylase was well protected within the micro-pellets and nearly no $\alpha$-amylase was lost in pH 3 when treated for 1 hour (Table 4), as one hour is long enough for small particles to pass through the stomach and flow into the intestine. In addition, almost all of the bypassed amylase was released after 2 hours of incubation at neutral pH with lipase and pancreatin, although it was very resistant in acidic environment. Approximately 98 % of activity was retained, suggesting that there was very little leakage at acidic pH and very effective release in small intestine.

Table 4. The initial and remaining activities of protected $\alpha$-amylase, U/g

| Enzyme | Initial Activity U/g | Remaining/Released Activity | |
| --- | --- | --- | --- |
| | | U/g | % |
| Protected $\alpha$-amylase | 24,000 | 23,500 | 98 |

Effects on the Release of Reducing Sugar by Two-Step Method

The results of the effect of supplementing $\alpha$-amylase on the release of the reducing sugar tested with two-step method are displayed in Table 4. Under both treatments, Refined™ $\alpha$-amylase showed no effect in reducing sugars, as compared to the blank control (p>0.05). This result was consistent with the data for acid stability, where all of the activity of Refined™ $\alpha$-amylase was lost at low pH and therefore no effect was observed on production of reducing sugar from the substrate.

In contrast, the protected $\alpha$-amylase showed an increase in release of reducing sugars as compared to the blank control (Table 5). This result was consistent with the data on acid stability, where all of the activity was retained upon treatment at low pH, thus the remaining activity could work on the substrate at the neutral pH and release more reducing sugars. When compared to the blank control and the Refined™ $\alpha$-amylase sample, the amount of reducing sugars released using protected $\alpha$-amylase, on both corn and compound feed substrates, increased significantly (p<0.01). This significant increased was seen when supplementing with the either the equal weight or equal enzymatic activity protected $\alpha$-amylase. Moreover, although the enzymatic activity of the Refined™ $\alpha$-amylase was 4-fold higher than the protected $\alpha$-amylase, its reducing sugars were significantly lower.

Table 5. Comparison of the effects of the protected $\alpha$-amylase and Refined™ $\alpha$-amylase on the reducing sugar released from corn meal and compound feedstuff tested by two-step method, mg/g substrate, n = 3

| | Blank Control | Refined™ $\alpha$-amylase | Protected $\alpha$-amylase (of equal weight) | Protected $\alpha$-amylase (of equal activity) | SEM | P |
| --- | --- | --- | --- | --- | --- | --- |
| Corn | 34.6[Cc] | 34.2[Cc] | 45.6[Bb] | 53.8[Aa] | 0.79 | 0.0001 |
| Compound Feed | 43.6[Cc] | 43.7[Cc] | 47.1[Bb] | 51.9[Aa] | 0.57 | 0.0001 |

[A, B, C] Means with the different letters within a row differ significantly (p<0.05).

[a, b, c] Means with the different letters within a row differ highly significantly (p<0.01).

In addition to examining the single enzyme, the effect of replacing the Refined™ $\alpha$-amylase in Kemzyme® Dry with the protected $\alpha$-amylase was also examined. Three formulations were used: I) regular Kemzyme® Dry, II) Kemzyme® Dry in which the Refined™ $\alpha$-amylase was replaced with an equal weight of the protected $\alpha$-amylase, and III) Kemzyme® Dry in which the Refined™ $\alpha$-amylase was replaced with an equal enzymatic activity of the protected $\alpha$-amylase (see enzyme activities in Table 1). The results are summarized in Table 5. Consistent with the results in Table 4, both the Kemzyme® II and III formulations containing the protected $\alpha$-amylase showed a higher release of reducing sugars as compared to the blank control and the Kemzyme® I formulation (Table 5). In addition, Kemzyme® III released significantly more reducing sugars than Kemzyme® II (p<0.01). However, Kemzyme® III also contained approximately four times as much protected $\alpha$-amylase as compared to Kemzyme® II, thus the increased release of reducing sugars in the Kemzyme® II formulation was likely an activity-based dosage effect. Furthermore, when the amount of reducing sugars released due to Kemzyme® I (Table 6) and Refined™ $\alpha$-amylase (Table 5) was compared, the Kemzyme® I formulation showed a higher level of reducing sugars. Kemzyme® I contains xylanase, $\beta$-glucanase, and cellulase, and these non-starch polysaccharidases can also degrade non-starch polysaccharides into reducing sugars. Therefore, the reducing sugar increase seen in Kemzyme® I treatments could be attributed to the non-starch polysaccharidases and the synergism between them.

Table 6. Comparison of the effects of different Kemzyme® formulas on the reducing sugar released from corn meal and compound feedstuff tested by two-step method, mg/g substrate, n = 3

|  | Blank Control | Kemzyme® I | Kemzyme® II | Kemzyme® III | SEM | P |
|---|---|---|---|---|---|---|
| Corn | 36.2[Cc] | 36.8[Cc] | 47.3[Bb] | 53.5[Aa] | 0.68 | 0.0001 |
| Compound Feed | 43.6[Cc] | 44.8[Cc] | 51.4[Bb] | 57.0[Aa] | 0.46 | 0.0001 |

[A, B, C] Means with the different letters within a row differ (p<0.05).
[a, b, c] Means with the different letters within a row differ significantly (p<0.01).

Effects on the Release of Reducing Sugar by Three-step Method

Alpha-amylase is known as a fast-acting enzyme; therefore, it may digest a significant amount of starch in the mouth cavity and esophagus, potentially making an acid-resistance $\alpha$-amylase unnecessary. Therefore, a three-step method was designed, which incorporated the two-step method, and also included an incubation step to simulate the mouth cavity and esophagus in order to study the effects of the Refined™ and the protected $\alpha$-amylase on the digestion of starch at these two additional sites.

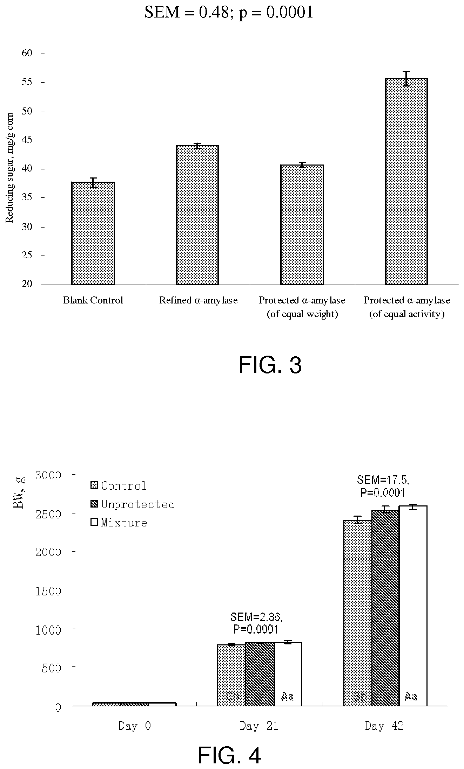

The results of the release of reducing sugar from corn substrate tested by the three-step method are presented in Fig. 3. In contrast to the two-step assay in which Refined™ $\alpha$-amylase showed no effect, in the three-step assay, Refined™ $\alpha$-amylase showed a significant effect compared to the Control (p<0.01). These results demonstrate that Refined™ $\alpha$-amylase has released a significantly amount of reducing sugar in the first step, the step that simulated the mouth cavity and the esophagus.

The effect of substituting the Refined™ $\alpha$-amylase with an equal amount of protected $\alpha$-amylase activity was consistent with the results tested by two-step method. The reducing sugar was significantly higher than the other three treatments (p<0.01), suggesting that the protected $\alpha$-amylase was more effective than Refined™ $\alpha$-amylase despite the fact that Refined™ $\alpha$-amylase degrades part of the starch in the mouth cavity and esophagus. The equal weight protected $\alpha$-amylase showed a weaker response than both Refined™ $\alpha$-amylase and the equal enzymatic activity protected $\alpha$-amylase (p<0.01), suggesting that the dosage of protected $\alpha$-amylase should be further optimized.

Previously, we screened Refined™ $\alpha$-amylase and found it to be a highly thermal-stable amylase, therefore it is used in all current enzyme blends as the source of $\alpha$-amylase. Thermal stabilities of Refined™ $\alpha$-amylase and the protected $\alpha$-amylase are given in Table 7. Refined™ $\alpha$-amylase retained > 90% of its activity after all treatments, except in the 90°C for 10 min, in which activity was 87.3 %. When Refined™ $\alpha$-amylase was pelletized and encapsulated into the protected $\alpha$-amylase, statistically significant improvements were seen in stability at 80°C for 5 minutes, 90°C for 5 minutes, and 90°C for 10 minutes (p<0.05). Furthermore, under the most stringent test conditions (90°C for 5 and 10 minutes), the statistical significance of the improvement was even more pronounced (p<0.01).

Table 7. Thermal stability of Refined™ $\alpha$-amylase and protected $\alpha$-amylase, %

|  | 80°C | | 90°C | |
|---|---|---|---|---|
|  | 5 min | 10 min | 5 min | 10 min |
| Refined™ $\alpha$-amylase | 96.6 | 93.5 | 91.8 | 87.3 |
| Protected $\alpha$-amylase | 99.8 | 93.8 | 95.4 | 92.8 |
| SEM | 0.76 | 1.85 | 0.36 | 0.80 |
| P | 0.0418 | 0.9157 | 0.0021 | 0.0083 |

DISCUSSIONS

A process was developed to protect an acid-sensitive $\alpha$-amylase from the low pH environment of the stomach in order to allow the enzyme to reach its main site of activity, the small intestine, in a fully active state. One of the problems of applying $\alpha$-amylase in animals is the lack of available acidic $\alpha$-amylase. In monogastric animals, the pH in stomach is generally between 2.5 to 3.0. From stomach to lower digestive tract, the pH value gradually increases to 7.8. Therefore an ideal exogenous digestive enzyme needs to be resistant to the low pH in stomach. Unfortunately almost all of the $\alpha$-amylases in market fail to meet this requirement. Both Refined™ $\alpha$-amylase and BAN 800™ were fully inactivated by treatment of pH 3 for 15 minutes. Thus neither the Refined™ $\alpha$-amylase nor the BAN 800™ $\alpha$-amylase would reach the small intestine in an active state and therefore would not be able to degrade starch at this site. The protected α-amylase was stable at pH 3.0 for at least 3 hours, indicating it could pass safely through the stomach and reach the small intestine in an active state.

The two-step method was used to simulate the stomach/small intestine environments. In the two-step method the protected α-amylase, either in the single enzyme form or in Kemzyme® Dry form, released significantly more reducing sugars from the tested substrates as compared to the Refined™ α-amylase (p<0.01). In contrast, the Refined™ α-amylase showed no effect at releasing reducing sugars, which was consistent with the acid-stability test.

Nevertheless, in animal trials Refined™ α-amylase still showed certain level of efficacy in animal performance, thus, it was speculated that α-amylase is a fast-acting enzyme and it starts working at the mouth cavity and esophagus. To test this, a three-step method was designed to simulate starch digestion in the mouth cavity/esophagus/stomach/small intestine environments. Feed stays in the mouth cavity and esophagus only for a short period of time and the environment of mouth cavity and esophagus are not very aqueous, therefore it was hypothesized that the amount of starch digestion at these sites was limited. However, Refined™ α-amylase showed increased release of reducing sugars in the three-step model as compared to the two-step model suggesting that the α-amylase does degrade starch in the mouth cavity and the esophagus. Nevertheless, when examining total reducing sugars released, the protected α-amylase was still more effective than Refined™ α-amylase.

The α-amylase also showed improved thermal stability. The results could suggest that the procedure of pelletization and encapsulation could also be used to protect other thermal-unstable enzymes.

CONCLUSIONS

In summary, a process was developed to protect the acid-sensitive α-amylase from inactivation in the acid environment of the stomach. Both Refined™ α-amylase and BAN 800™ α-amylase were irreversibly inactivated by low pH when exposed for 15 minutes, while the protected α-amylase was stable in pH 3.0 for at least 3 hour and was fully released in pH 7.0 in the presence of lipase/pancreatin. The reducing sugars released from corn and compound feedstuff when treated with the protected α-amylase either in the single enzyme form or in Kemzyme® Dry form, was significantly higher than those treated with Refined™ α-amylase (p<0.01). Moreover, the protected α-amylase also demonstrated improved thermal stability. Taken together, the protected α-amylase is highly acid- and thermal-stable, and can pass through the stomach and release in the small intestine to improve the digestibility of starch.

EXAMPLE 3

A metabolic trial was conducted in mature roosters to study the effects of the unprotected Jinzhi® α-amylase, the stomach-protected α-amylase, and their mixtures (at different ratios) on apparent metabolizable energy (AME) and digestibility of nutrients of a corn-soybean based diet.

A total of 36 weight-close Arbor Acres (AA) finished breeder roosters were randomly allocated into 6 groups, with one bird per replicate and 6 replicates per treatment. Group A was treated with rice bran (vehicle) and used as the blank control. Groups B through F were treated with the mixtures of the stomach-protected α-amylase and the unprotected α-amylase at the ratios of 0:100, 25:75, 50:50, 75:25 and 100:0 (activity/activity), respectively. The α-amylase activity of the preparations was 300 U/g and the applied dosage was 500 g/ton of finished feed. The experiment lasted for 11 days including 7 days of pre-experimental period and 4 days of formal experimental period. AME and digestibility of dry matter (DDM), crude protein (DCP), and ether extract (DEE) were determined. The data suggested that the supplementation of external α-amylase, either in the protected or the unprotected form, significantly improved these parameters compared to the blank control. Moreover, inclusion of the stomach protected α-amylase was important in improving AME, energy utilization, and dry matter digestibility.

A previous in vitro study indicated that the Jinzhi® commercial α-amylase of bacteria-origin was irreversibly inactivated by the acidic pH of the stomach environment. Protecting the α-amylase from acid inactivation provided better performance than the unprotected Jinzhi α-amylase in the whole gastrointestinal tract. However, it was also found that Jinzhi α-amylase degraded part of the starch in the mouth cavity and esophagus in a short period of time1. Therefore, supplementing with a mixture of the protected α-amylase and unprotected α-amylase may be more effective on animal performance, compared to supplementing with either the protected α-amylase or the unprotected α-amylase alone.

In order to determine the optimal ratio for the application of the protected α-amylase, a metabolic trial was conducted to study the effects of the unprotected Jinzhi α-amylase, the stomach-protected α-amylase, and their mixtures at different ratios on the apparent metabolizable energy (AME) and digestibility of nutrients of corn-soybean based diet using a classical bioassay in mature breeder roosters as described before.

MATERIALS AND METHODS

<u>Trial location</u>. The metabolic trial and chemical analysis were conducted at Heibei Incubation of Breeder Farm in Fushun City, Liaoning Province and Liaoning Shihua University, P.R.C., respectively.

<u>Animals and methods</u>. In this trial, total of 36 weight-close Arbor Acres (AA) finished breeder roosters (7 kg body weight) were randomly allocated into 6 groups, namely Groups A, B, C, D, E and F, one bird per replicate and 6 replicates per treatment. Groups A, B, C, D, E and F were treated with α-amylase Preparations I, II, III, IV, V and VI, respectively, at the dosage of 500 g/T of finished feed, respectively. The enzyme preparations were prepared in the 1ab of Kemin Agrifoods China and the ingredients are listed in Table 8. The trial lasted for 11 days, including 7 days of pre-experimental period and 4 days of formal experiment period.

Alpha-amylase preparations were provided by Kemin Agrifoods China. The unprotected Jingzhi® α-amylase (from *Bacillus subtilis*) was purchased from Jiangmen, China and was obtained from the Kemin Agrifoods China warehouse. The protected amylase was obtained from SkyPharm as described previously. The premix used in this trial was purchased from Wellhope Agri-Tech Co., Ltd (Table 9). A corn-soybean based diet was used in this trial, which was designed according to the nutritional needs for breeder cocks (Nutrient Requirements of Poultry: Nineth Revised Edition (NRC 1994)). The experimental diet composition and the nutrient levels are listed in Table 9.

Table 8. Information of the experimental preparations.

| Group | Preparation | Stomach-protected: unprotected enzyme (activity/activity) | α-amylase activity, U/g preparation | Dosage, g / ton of finished feed |
|---|---|---|---|---|
| A | I | --(Rice bran) | 300 | 500 |
| B | II | 0:100 | 300 | 500 |
| C | III | 25:75 | 300 | 500 |
| D | IV | 50:50 | 300 | 500 |
| E | V | 75:25 | 300 | 500 |
| F | VI | 100:0 | 300 | 500 |

Table 9. Experimental based diet composition.

| Ingredients | Based diet |
|---|---|
| Corn (%) | 72.5. |
| Soybean meal (45 %CP) (%) | 22.5 |
| 5% premix (%) | 5 |
| Nutrient level | |
| Poultry ME (KJ/kg) | 2833.33 |
| CP (%) | 17.45 |
| EE (%) | 4.27 |
| Ca (%) | 0.66 |
| Available P (%) | 0.41 |
| Lys (%) | 0.87 |
| Met (%) | 0.41 |
| Met+Cys (%) | 0.68 |
| L-try (%) | 0.19 |
| Thr (%) | 0.65 |

CP: crude protein
EE: ether extract

<u>Management of trial animals</u>. The trial birds were kept in metabolic cages individually, with free access to water and natural lighting during the whole experimental period. In the pre-experiment period, birds had free access to the experimental diets. At day-8, all the birds were fasted for 48 h to empty food residue in gastrointestinal tract. On day-10 the birds were forced-fed with 70 g (about 1% of body weight) of the experimental feed as described before. All excreta were collected using accessory collection pans for 48 h. Immediately after collection contaminants such as feathers, scales, and debris were removed carefully before excreta were stored in closed containers at 18°C to prevent microbial fermentation.

Parameters determined. The contents of energy, dry matter, crude protein and ether extract in diet and excreta were determined as described by AOAC (Official Methods of Analysis (15th edition), AOAC, Arlington, VA, USA (1990)). All analyses were performed in duplicate. All the excreta and diet were dried for 24 h at 80°C. The dried excreta and diet were allowed to equilibrate to atmospheric conditions before being weighed. Representative samples were taken and ground to pass through a 0.45-mm sieve. The equations in Table 10 were used to calculate AME, DDM, DCP, DEE.

Table 10 - Equations for Calculating AME, DDM, DCP, DEE (FI = feed intake; EO = excreta output)

$$\text{AME (KCal/kg)} = \frac{(FI \times GE_{diet} - EO \times GE_{excreta})}{\text{Dry Matter FI}}$$

GE = gross energy

$$\text{Energy digestibility (\%)} = \frac{(FI \times energy_{diet} - EO \times energy_{excreta}) \times 100}{(FI \times energy_{diet})}$$

$$\text{DDM (\%)} = \frac{(FI \times dry\ matter_{diet} - EO \times dry\ matter_{excreta}) \times 100}{(FI \times dry\ matter_{diet})}$$

$$\text{DCP (\%)} = \frac{(FI \times crude\ protein_{diet} - EO \times crude\ protein_{excreta}) \times 100}{(FI \times crude\ protein_{diet})}$$

$$\text{DEE (\%)} = \frac{(FI \times ether\ extract_{diet} - EO \times ether\ extract_{excreta}) \times 100}{(FI \times ether\ extract_{diet})}$$

Data analysis. The data were analyzed by ANOVA using the statistical software SAS (v6.12, 1996). Multiple comparison tests used Duncan's multiple-range test. Significance was declared when p < 0.05 and high significance was declared when p < 0.01.

RESULTS

The results are presented in Table 11. The AME of Group E was 2414 Kcal/kg, which was the highest among all the treatments (p<0.01). There was no significant differences in AME among Groups B, C, D and F (p>0.05). However, the AME of these four groups were improved compared to the blank control, either numerically or statistically. The digestibility of energy results showed the same trend as the AME results.

Groups C and D showed a statistically higher DDM than the other groups (P<0.05). No significant differences in DDM were observed among the other four groups. All the five treatment groups showed improved DCP as compared to the blank control (Group A) (p<0.05), and there was no significant difference among these 5 groups. The only DEE significantly different from the control was Group C.

Table 11. Effects of enzyme preparations on AME and nutrients digestibility (D) of corn-soybean based diet in Arbor Acres (AA) mature breeder roosters.

|  | AME, Kcal/Kg | D of Energy, % | DDM, % | DCP, % | DEE, % |
|---|---|---|---|---|---|
| A | 2333[Cc] | 69.3[Cc] | 69.5[B] | 49.0[Bb] | 78.9[B] |
| B | 23541[BCbc] | 69.9[BCbc] | 69.4[B] | 51.3[Aa] | 79.9[AB] |
| C | 23551[BCbc] | 69.9[BCbc] | 70.8[A] | 50.8[Aab] | 80.4[A] |
| D | 2375[Bb] | 70.5[Bb] | 70.8[A] | 50.4[Aab] | 79.9[AB] |
| E | 2414[Aa] | 71.7[Aa] | 69.7[B] | 51.7[Aa] | 79.1[B] |
| F | 2363[Bbc] | 70.2[Bbc] | 69.5[B] | 51.7[Aa] | 79.1[B] |
| SEM | 9.1 | 0.27 | 0.34 | 0.45 | 0.36 |
| P | 0.0001 | 0.0001 | 0.0067 | 0.0017 | 0.0337 |

[A,B,C] Value within a column differ significantly (p<0.05);
[a,b,c] Value within a column differ highly significantly (p<0.01).

DISCUSSION

In summary, supplementing external α-amylase increased the utilization of dietary energy as compared a blank control statistically or numerically. Compared to the unprotected α-amylase, the inclusion of the protected α-amylase showed an apparent benefit. Application of a mixture of the stomach-protected α-amylase and the unprotected Jinzhi® α-amylase at the ratio of 75:25 gave the best AME value and energy utilization (p<0.01). Application of a mixture of stomach-protected α-amylase and the unprotected Jinzhi α-amylase at the ratios of 25:75 and 50:50 significantly improved the digestibility of dry matter (p<0.05). Because AME is generally more relevant to growth performance, the ratio with the highest AME value (75:25) suggesting that the major action site of α-amylase is small intestine rather than mouth cavity and esophagus. A growth performance trial with these ratios will be designed to confirm the effect of enzyme protection.

EXAMPLE 4

A feeding trial was conducted in broilers to study the effects of the stomach-protected α-amylase on the growth performance and digestibility of nutrients of a corn-soybean based diet.

MATERIALS AND METHODS

Experimental materials and analyzing methods. Unprotected α-amylase and Unprotected + slow-release α-amylase used in this experiment were provided by Kemin Industries (Zhu Hai), Inc. The α-amylase activity of both products is 300 U/g. Alpha-amylase products were mixed into compound feed by stepwise dilution method.

Experimental animals and feeding management. 540 healthy 1-day old AA broiler chickens with the average body weight of 42.1g were used in this experiment and were housed in poultry trial base of National Feed Engineering Technology Research Center. Experimental birds were net-reared in 3-layer cages (90cm×60cm×40cm) equipped with dripper drinker. Birds were free to get access to feed and water. Room temperature during the first 3 days in brood time was kept at 33°C and then was reduced by 3°C until reached to 24°C. Illumination (15-20 lux) and ventilation were kept 24h during day 1 to day 42. All birds were vaccinated against new castle disease on day 7 and 28; vaccinated against bursa of Fabricius on day 14 and 21. The whole feeding period included two phases: starter phase from day 1 to 21 and grower phase from day 22 to day 42. The whole experiment was conducted according to animal welfare standard issued by China Agricultural University.

Experimental design and experimental diets. All experimental broilers were randomly allotted into 3 treatments, 6 replicates per treatment and 30 chickens per replicate. 10 birds were housed in one cage and every 3 cages were regarded as 1 replicate. Experimental diets were designed as followed: (1) Control group, basal diet + 500g rice bran/t diet; (2) Unprotected group (Group 2), basal diets + 500g Unprotected α-amylase/t diet (300 U/g α-amylase activity); (3) Mixture group (group 3), basal diets + 500g Unprotected α-amylase + slow-release α-amylase/t diet (300 U/g α-amylase activity). Corn-soybean meal basal diets were formulated according to NRC (1994) recommendation (see Table 12) and the experimental diets were mash feed.

Table 12 Composition of basal diets and nutrient level

| Items | Starter phase (0~21 d) | Grower phase (22~42d) |
|---|---|---|
| Ingredients (%) | | |
| Corn | 53.70 | 59.11 |
| Soybean meal, 44% crude protein | 33.80 | 28.42 |
| Fish meal, 64% crude protein | 4.00 | 4.00 |
| Soybean oil | 4.22 | 4.68 |
| Limestone | 1.28 | 1.18 |
| Dicalcium phosphate | 1.29 | 1.07 |
| Salt | 0.35 | 0.35 |
| Premix[1] | 1.00 | 1.00 |
| L-Lysine·HCl, 78% | 0.08 | 0.04 |
| DL-Methionine, 98% | 0.28 | 0.15 |
| Total | 100.00 | 100.00 |
| Nutrient levels | | |
| Metabolic energy ( Kcal/g ) | 3.00 | 3.10 |

(continued)

| Nutrient levels | | |
|---|---|---|
| Crude protein (%) | 22.00 | 20.00 |
| Calcium (%) | 1.00 | 0.90 |
| Available phosphorus (%) | 0.45 | 0.40 |
| Lysine (%) | 1.31 | 1.15 |
| Methionine (%) | 0.65 | 0.50 |

[1]Provided per kilogram of feed: Zn, 60mg; Fe, 95mg; Mn, 80mg; Cu, 10mg; I, 0.35mg; Se, 0.3mg; VA, 10000IU; VD3, 2750IU; VE, 30IU; VK3, 2mg; VB12, 12μg; Riboflavine, 6mg; Nicotinic acid, 40mg; Pantothenic acid, 12mg; Pyridoxine, 3mg; Biotin, 0.2mg; Choline Chloride, 800mg.

Analyzing indices and methods. The body weight and the rest feed were measured on day 21 and day 42 to calculate the average daily gain (ADG), average daily feed intake (ADFI) and feed conversion ratio (FCR). Mortality (%) was calculated at the end of the experiment.

Total collection of feces and urine were applied in this experiment. During day 23 to 28, all feces and urine were collected in consecutive 5 days and were measured with feathers and feed removed. After being mixed uniformly, samples of fresh feces and urine were taken and dried at 65°C until the temperature was constant. Then, following water uptake at room temperature for 24 h, feces and urine samples were measured. While the feed was measured everyday, 100 g sample of experimental diets were collected. Diet samples for consecutive 5 days were mixed and separated. Both samples of diets and feces and urine were ground through 40 meshes screen for later analysis. Dry matter(DM), crude protein(CP), energy and crude fat(EE) were analyzed using 100-105°C drying method, semi-micro Kjeldahl determination of nitrogen, WZR-IA Auto-calorimeter and Tecator Soxhlet fat extractor method respectively.

RESULTS AND DISSCUSSIONS

It has been reported that the supplement of complex enzyme preparation with amylase involved in diets of poultry could improve daily weight gain and feed conversion ratio (Zenella et.al., 1999) which is consistent with effects of amylase on the growth performance of broilers observed in this experiment (Fig. 4).

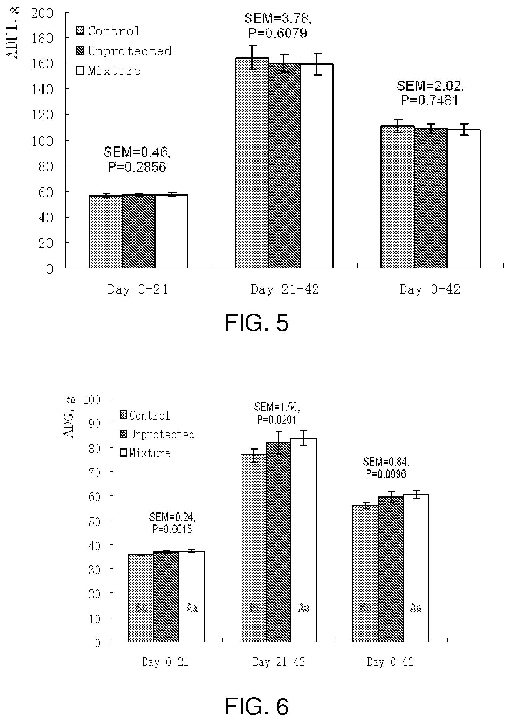

Results showed that compared with control group, body weight of 21-day-old and 42-day-old broiler chicken in groups with Unprotected α-amylase or Unprotected + slow-release α-amylase supplemented were significantly higher ($P<0.01$). At day-21, the mixture presented a higher performance compared to unprotected α-amylase($p<0.05$), but the difference between two groups was not significant ($P>0.05$)(Figure 1). Effects of experimental diets on average daily feed intake (ADFI), average daily weight gain (ADGA) and feed conversion ratio (FCR) were shown in Figs. 5, 6 and 7, respectively. ADFI of different growth phase in all three groups were not affected ($P>0.05$); ADG of different growth phase and the whole period in two experimental groups were extremely higher than the one in control group ($P<0.05$) but the difference between two experimental groups was not significant ($P>0.05$); FCR of starter phase in all groups were not different ($P>0.05$) but FCR of grower phase in groups with α-amylase supplemented were significantly higher than the one in control group ($P<0.05$), and FCR in Unprotected + slow-release α-amylase group was significantly higher than the one in Unprotected α-amylase group; FCR of whole period in two experimental groups were extremely higher than the one in control group ($P<0.01$), but the difference between two experimental groups was not significant ($P>0.05$).

It has been suggested by many researches that the addition of exogenous amylase can supplement the deficiency of secretion of endogenous enzymes of young animals, associate with nutrient digestion and thus improve the growth performance. Pack and Bedford (1997) has reported by reviewing many experiments of broilers that when adding complex enzyme preparation with amylase involved in corn-soybean meal diets, the average death rate of broilers was reduced from 7.9% to 6.4%. Jin (2002) summarized 9 similar experiments which were conducted in Asian countries and suggested that the supplement of complex enzyme preparation with amylase involved could increase the average growth rate of broilers by 3.5% and increase FCR by 2.5-13.9%. This result is consistent with the finding by Ritz et.al., (1995), but the supplement of exogenous amylase had no effect on FCR which is consistent with the report by Gracia et.al., (2003). There is a great variation of effects of single exogenous amylase on the growth performance in starter phase of broilers. Gracia et.al., (2003) reported that when adding α-amylase in corn basal diets, ADG of 7-day-old broilers was increased by 9.4% ($P<0.05$) and FCR was increased by 4.2% ($P<0.05$). However, Mahagna et.al., (1995) found no effect of amylase supplement at 250 μg/kg or protease complex enzyme preparation supplement at 1000 μg/kg on ADFI and the growth performance of broilers at the age of 1-14 days. Gracia et.al., (2003) suggested that the diversity of results of different experiments might due to the different source of amylase (*Bacillus amyloliquefaciens* vs. *Bacillus subtilis*), different types of cereal (corn vs. sorghum), different addition activity of amylase and different feed forms (particle vs.

mash) etc. Therefore, different addition level may be the main cause resulting in the difference of effects of exogenous amylase supplement on the growth performance of young broilers, and this speculation was approved by the linear relationship between weight gain and addition level.

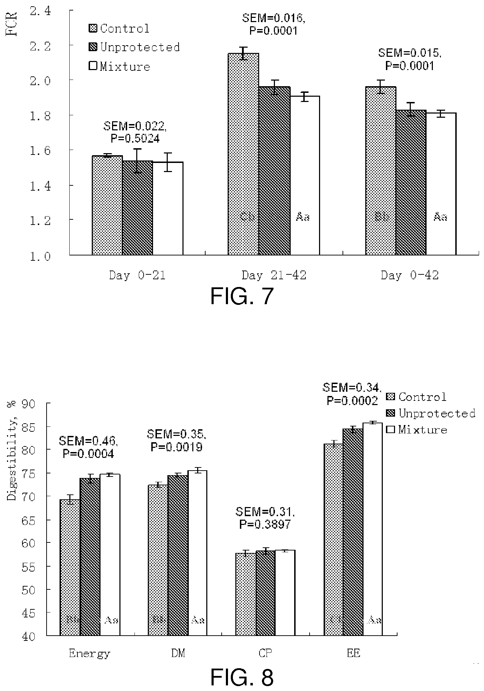

The metabolic availability of energy and dry matter in two experimental groups were not significantly different but were extremely higher than the one in control group (P<0.01); the metabolic availability of crude fat in two experimental groups were extremely higher than the one in control group (P<0.01) and the one in Unprotected + slow-release $\alpha$-amylase was significantly higher than the one in Unprotected $\alpha$-amylase group (P<0.05) (Figure 8). It has been reported by Zanella et.al., (1999) that when adding complex enzymes (amylase, protease and xylanase) in corn-soybean meal diets, ileum starch digestibility and feces starch digestibility of 37-day-old broilers were increased from 91.2% to 93.0% and 98.2% to 98.5% respectively. Gracia et.al., (2003) reported that $\alpha$-amylase could extremely improve apparent availability of organics, starch and gross energy of 28-day-old broilers. Ritz et.al., (1995) also found that the supplement of complex enzymes with amylase involved in corn-soybean meal diets could improve ileal energy digestibility. It's like that the digestive system of broilers in grower phase is well developed and therefore the amylase supplement can improve the digestibility of starch and energy thus improving the growth performance. Zenella et.al., (1999) have studied the optimal addition level of enzyme preparation in AA broiler diets by using quadratic regression rotational combinational design and found that effects of single enzyme on weight gain followed: amylase > lipase > neutral protease.

CONCLUSIONS

The supplement of protected $\alpha$-amylase can considerably improve the growth performance of broilers and increase the metabolic availability of energy, dry matter and crude fat. Moreover, compared to the unprotected $\alpha$-amylase, the mixture of unprotected and slow-release $\alpha$-amylase has more positive effects on ADG, FCR and crude fat availability in broilers.

EXAMPLE 5

A feeding trial was conducted in piglets to study the effects of the stomach-protected $\alpha$-amylase on the growth performance of piglets.

MATERIALS AND METHODS

Experimental animals and design. Total of 200 healthy 7-day-old piglets which had similar genetic background from 20 litters (10 ± 1 piglets per liter) were used in this experiment and were allocated into 4 treatments (A, B, C and D) with 5 replicates per treatment and 1 litter per replicate. Treatment A was control group and experimental diets were basal diets; experimental diets in treatment B was basal diets supplemented with Porzyme® TP 100, which was purchased from Danisco; experimental diets in treatment C was basal diets supplemented with Kemzyme PS. The $\alpha$-amylase in Kemzyme PS is provided by both regular and slow-release $\alpha$-amylase. Experimental diets in treatment D were basal diets supplemented with Kemzyme Dry. The $\alpha$-amylase in Kemzyme Dry is regular. Basal diets included pre-weaning feed (creep feed) and post-weaning feed (starter feed). Experimental piglets were weaned at 21-day-old and were fed creep feed from 7-day-old to 28-day-old and post-weaning feed from 28-day-old to 42-day-old. The experimental design is shown in Table 13.

Table 13 Experimental design

| Treatment | Additive & Dosage | No. of replicates | Average No. of piglets in each replicate |
|---|---|---|---|
| A | Blank Control | 5 | 10 |
| B | TP 100 , 1000 g/T | 5 | 10 |
| C | Kemzyme PS , 500 g/T | 5 | 10 |
| D | Kemzyme Dry, 1000 g/T | 5 | 10 |

Composition and nutrient level of basal diets. The composition and nutrient level of basal diets in pre-weaning and post-weaning periods are shown in Table 14 and 15.

Table 14 Composition and nutrient level (%) of pre-weaning feed

| Item | Component, kg |
|---|---|
| Composition | |
| Corn | 290.8 |
| Extruded Corn | 140 |
| Dehulled soybean meal | 109 |
| Extruded soybean | 150 |
| Fish meal (62.5 %) | 40 |
| Spray-dried porcine plasma | 30 |
| Dried porcine solubles | 40 |
| Whey powder | 50 |
| Glucose | 50 |
| Sucrose | 47 |
| Soybean oil | 10 |
| Salt | 2 |
| Calcium hydrogen phosphate | 8 |
| Limestone | 9.5 |
| Citric acid | 5 |
| Zinc oxide | 3.5 |
| Copper sulphate | 0.5 |
| Le Daxiang | 0.4 |
| Le Datian | 0.1 |
| Lys-HCl | 1.5 |
| DL-Met | 1.4 |
| Thr | 1.2 |
| 1% Premix | 10 |
| Nutrient level | |
| CP, % | 21 |
| DE , kcal/kg | 3400 |
| Lys , % | 1.4 |
| Met + cys , % | 0.7 |
| Ca, % | 0.8 |
| TP, % | 0.65 |

Table 15 Composition and nutrient level (%) of post-weaning feed

| Item | Component, kg |
|---|---|
| Composition | |
| Corn | 649.5 |
| Dehulled soybean meal | 130 |
| Soy protein concentrate | 60 |
| Fish meal | 50 |
| Soybean oil | 10 |
| Lactose | 60 |
| Salt | 2 |
| Limestone | 9 |
| Calcium hydrogen phosphate | 9 |
| Zinc oxide | 2.5 |
| 1% Premix | 10 |
| Lys | 3.9 |

(continued)

| Item | Component, kg |
|------|---------------|
| Composition | |
| Met | 1.4 |
| Thr | 2.2 |
| Trp | 0.5 |
| Total | 1000 |
| Nutrient level | |
| CP , % | 18.7 |
| Lys , % | 1.29 |
| Met+cys, % | 0.70 |
| DE , kcal/kg | 3400 |
| Ca , % | 0.76 |
| TP , % | 0.6 |

Feeding and Management. This experiment was conducted in Jin Xian Central swine farm of Jiangxi Changqing Animal Husbandry Co., Ltd. Experimental piglets were reared following the routine management in the farm where the initial weight of all piglets was measured when 7-day-old. All experimental piglets were fed by creep feed using special feed tray and were free to get access to feed, drink and nursing. The excess feed of each day was air-dried and weighed and the feed intake was calculated and recorded every day. All experimental piglets were weaned when 21-day-old and moved to nursery pen afterwards. During the first 7 days after weaning, piglets were still fed creep feed and were fed post-weaning feed from 28-day-old. The duration of the experiment was 35 days.

Analyzing indices. Feed and the weight of piglets were weighed when piglets were at the age of 7-day, 21-day, 28-day, 35-day and 42-day. The average litter weight, daily weight gain (ADG), daily feed intake (ADFI), feed conversion (F/G) and diarrhea rate were calculated using replicate as a unit. The number of death and culling of each treatment was recorded and the death and culling rate was calculated at the end of the experiment.

Data analysis and Statistics. All data was analyzed by analysis of variance and multiple comparisons using SPSS 11.0. Replicate was used as unit and the difference was considered as significant when $P < 0.05$. Results of all indices of each treatment were shown as "average value $\pm$ SD".

RESULTS

Effects of the protected feed additive on the growth performance of 7 to 21-day-old piglets are shown in Table 16. ADG and ADFI of 4 treatments were not significantly different ($P>0.05$), but the diarrhea rate in Treatment C and D were significantly lower than the control group ($P<0.05$) where the diarrhea rate of piglets in treatment C was the lowest.

Effects of the protected additives on the growth performance of 21 to 28-day-old piglets (within 7 days after weaning) are shown in Table 17. ADG in treatment B and D was higher than the one in treatment A (control group) but the difference was not significant ($P>0.05$). ADG in treatment C was higher than treatment A (control group) and B ($P<0.05$). The difference of ADFI and F/G of all 4 treatments were not significant ($P>0.05$). The diarrhea rate in treatment A and C were not significantly different, but the one in treatment B and D was significantly lower than treatment A (control group) ($P<0.05$). Considering the whole period which piglets were fed creep feed, there was no significant effect of the protected additives on the growth performance.

Effects of the protected additives on the growth performance of weaning piglets are shown in Table 18-22. It has been shown in Table 19 that during 28 to 35-day-old, ADG in treatment C was significantly higher than the one in treatment A, B and D ($P<0.05$), but the difference between Treatment A, B and D were not significant ($P>0.05$). The differences of ADFI and F/G between all 4 treatments were not significant, but the values of ADFI and F/G in treatment C shown from the table were higher than other 3 treatments. The diarrhea rates of piglets in treatment B, C and D were significantly reduced ($P<0.05$).

Table 20 indicates that during 35 to 42-day-old, ADG was significantly increased when adding Kemin C ($P<0.05$) and even higher than the one in treatment B. There was an increasing tread of ADG in treatment D but the difference was not significant compared with the control group. The differences of ADFI between all 4 treatments were not significant and F/G in Treatment C was the best, but the differences between all 4 treatments were not significant. The diarrhea rate was significantly reduces when adding enzyme products B, C and D ($P<0.05$).

Table 21 shows that the results of the growth performance of piglets during 28 to 42-day-old were similar with the results during 35 to 42-day-old. ADG in treatment C was significantly increased (P<0.05), but the difference of ADG of other 3 treatments was not significant and the difference of ADFI and F/G between all 4 treatments were not significant.

Taking the whole experiment period into account, there was no significant effect of enzyme products B, C and D on the growth performance of piglets. However, enzyme products B, C and D have positive effects on improving the growth performance of postweaning piglets and reducing the diarrhea rate of piglets. It has been indicated that the protected feed additive C has achieved the best effect.

Table 16 Effects of additives on the growth performance of pre-weaning piglets (7 to 21-day-old)

| Item | Treatment | | | | P value |
|---|---|---|---|---|---|
| | A | B | C | D | |
| Initial litter weight, kg | 25.05±1.11 | 25.34±1.08 | 25.02±1.23 | 25.17±1.34 | 0.621 |
| Final litter weight, kg | 56.32±1.20 | 56.86±1.64 | 57.13±1.49 | 55.11±0.81 | 0.074 |
| ADG, g | 221.5±4.5 | 223.2±5.3 | 227.9±5.3 | 224.3±4.2 | 0.193 |
| ADFI, g | 11.4±2.3 | 11.6±2.0 | 12.1±2.1 | 12.2±2.5 | 0.065 |
| Diarrhea rate, % | 8.7±0.7[b] | 8.2±0.8[ab] | 6.5±0.5[a] | 7.7±0.6[ab] | 0.038 |
| Death and culling rate, % | 6.0±0.5[b] | 4.0±0.4[a] | 6.0±0.6[b] | 6.0±0.6[b] | 0.047 |

Note: F/G was not included in this table because feed intake is extremely low during nursery period.

[a,b]Means with different letters within a row differ, p<0.05

Table 17 Effects of additives on the growth performance of post-weaning piglets (21 to 28-day-old)

| Item | Treatment | | | | P value |
|---|---|---|---|---|---|
| | A | B | C | D | |
| Initial litter weight, kg | 56.32±1.20 | 56.86±1.64 | 57.13±1.49 | 55.11±0.81 | 0.074 |
| Final litter weight, kg | 66.34±1.12[ab] | 65.01±0.78[b] | 67.49±0.62[a] | 64.58±1.03[bc] | 0.035 |
| Final body weight, kg | 6.91±0.54 | 6.98±0.75 | 7.18±0.63 | 7.02±0.67 | 0.147 |
| ADG, g | 149.1±3.5[b] | 151.5±6.0[ab] | 161.2±4.1[a] | 152.8±6.0[ab] | 0.043 |
| ADFI, g | 248.1±6.0 | 249.8±6.3 | 259.9±5.2 | 250.6±4.0 | 0.215 |
| F/G | 1.67±0.20 | 1.65±0.18 | 1.61±0.19 | 1.64±0.21 | 0.760 |
| Diarrhea rate, % | 14.7±1.6[b] | 12.5±1.3[ab] | 12.2±1.1[ab] | 11.5±1.2[a] | 0.038 |
| Death and culling rate, % | 0 | 2.08 | 2.13 | 0 | |

[a,b] Means with different letters within a row differ, p<0.05

Table 18: Effects of A, B, C and D on the growth performance of piglets (7 to 28-day-old)

| Item | Treatment | | | | P value |
|---|---|---|---|---|---|
| | A | B | C | D | |
| Initial litter weight, kg | 25.05±1.11 | 25.34±1.08 | 25.02±1.23 | 25.17±1.34 | 0.621 |
| Final litter weight, kg | 66.34±1.12[ab] | 65.01±0.78[b] | 67.49±0.62[a] | 64.58±1.03[bc] | 0.035 |
| ADG, g | 187.2±4.1 | 189.2±5.3 | 190.3±8.0 | 190.0±6.0 | 0.109 |
| ADFI, g | 179.3±9.0 | 182.4±10.0 | 185.7±8.2 | 184.6±9.7 | 0.275 |
| Diarrhea rate, % | 11.3±1.2 | 10.2±0.9 | 9.6±1.0 | 9.5±1.1 | 0.068 |
| Death and culling rate, % | 6.0[a] | 6.0[a] | 8.0[b] | 6.0[a] | 0.048 |

[a,b] Means with different letters within a row differ, p<0.05

Table 19: Effects of additives on the growth performance of post-weaning piglets (28 to 35-day-old)

| Item | Treatment | | | | P value |
|---|---|---|---|---|---|
| | A | B | C | D | |
| Initial litter weight, kg | 66.34±1.12[ab] | 65.01±0.78[b] | 67.49±0.62[a] | 64.58±1.03[bc] | 0.035 |
| Final litter weight, kg | 80.77±1.02 | 81.55±1.11 | 82.93±0.56 | 81.47±1.06 | 0.089 |
| Final body weight, kg | 8.06±0.87 | 8.11±0.90 | 8.21±0.93 | 8.14±0.99 | 0.481 |
| ADG, g | 208.1±3.0[b] | 210.2±4.1[b] | 218.4±4.0[a] | 214.8±6.0[ab] | 0.042 |
| ADFI, g | 349.1±7.0 | 343.3±5.6 | 350.1±6.3 | 349.6±6.0 | 0.532 |
| F/G | 1.63±0.15 | 1.63±0.17 | 1.61±0.16 | 1.62±0.17 | 0.658 |
| Diarrhea rate, % | 7.2±0.8[a] | 4.7±0.5[b] | 4.2±0.5[b] | 5.6±0.6[ab] | 0.042 |
| Death and culling rate, % | 0 | 0 | 0 | 0 | |

[a,b]Means with different letters within a row differ, p<0.05

Table 20: Effects of additives on the growth performance of post-weaning piglets (35 to 42-day-old)

| Item | Treatment | | | | P value |
|---|---|---|---|---|---|
| | A | B | C | D | |
| Initial litter weight, kg | 80.77±1.02 | 81.55±1.11 | 82.93±0.56 | 81.47±1.06 | 0.089 |
| Final litter weight, kg | 94.87±6.01 | 98.25±5.98 | 101.93±5.32 | 92.44±6.21 | 0.103 |
| Final body weight, kg | 9.81±0.11 | 10.04±0.11 | 10.38±0.12 | 10.22±0.12 | 0.321 |
| ADG, g | 235.1±6.1 | 236.2±4.9 | 238.1±5.8 | 237.8±5.3 | 0.136 |
| ADFI, g | 401.1±4.02 | 400.4±4.7 | 402.1±4.2 | 401.7±4.0 | 0.518 |
| F/G | 1.71±0.19 | 1.70±0.17 | 1.69±0.18 | 1.70±0.18 | 0.459 |
| Diarrhea rate, % | 5.0±0.5[a] | 3.8±0.6[b] | 2.7±0.7[b] | 2.9±0.5[b] | 0.033 |
| Death and culling rate, % | 0 | 0 | 0 | 0 | |

[a,b]Means with different letters within a row differ, p<0.05

Table 21: Effects of additives on the growth performance of Post-weaning piglets (28 to 42-day-old)

| Item | Treatment | | | | P value |
|---|---|---|---|---|---|
| | A | B | C | D | |
| Initial litter weight, kg | 66.34±1.12[ab] | 65.01±0.78[b] | 67.49±0.62[a] | 64.58±1.03[bc] | 0.035 |
| Final litter weight, kg | 94.87±6.01 | 98.25±5.98 | 101.93±5.32 | 92.44±6.21 | 0.103 |
| Final body weight, kg | 9.81±0.11 | 10.04±0.11 | 10.38±0.12 | 10.22±0.12 | 0.321 |
| ADG, g | 221.6±4.0[b] | 223.2±3.3[b] | 228.2±2.5[a] | 226.3±3.9[ab] | 0.047 |
| ADFI, g | 350.1±6.2 | 350.4±6.9 | 353.8±4.0 | 355.3±5.7 | 0.343 |
| F/G | 1.58±0.17 | 1.57±0.18 | 1.55±0.17 | 1.57±0.17 | 0.542 |
| Diarrhea rate, % | 4.2±0.4[a] | 2.4±0.6[b] | 1.7±0.5[b] | 1.7±0.7[b] | 0.040 |
| Death and culling rate % | 0 | 0 | 0 | 0 | |

[a,b]Means with different letters within a row differ, p<0.05

Table 22: Effects of additives on the growth performance of piglets (7 to 42-day-old)

| Item | Treatment | | | | P value |
|---|---|---|---|---|---|
| | A | B | C | D | |
| Initial litter weight, kg | 25.05±1.11 | 25.34±1.08 | 25.02±1.23 | 25.17±1.34 | 0.621 |

(continued)

| Item | Treatment | | | | P value |
|---|---|---|---|---|---|
| | A | B | C | D | |
| Final litter weight, kg | 94.87±6.01 | 98.25±5.98 | 101.93±5.32 | 92.44±6.21 | 0.103 |
| ADG, g | 204.4±4.1 | 206.2±5.0 | 209.3±3.7 | 208.1±3.5 | 0.234 |
| ADFI, g | 264.7±4.4 | 266.4±6.5 | 269.7±6.9 | 269.9±9.0 | 0.224 |
| Diarrhea rate, % | 7.0±0.8[a] | 6.2±0.7[a] | 5.3±0.6[b] | 5.5±0.6[ab] | 0.035 |
| Death and culling rate, % | 6.0[a] | 6.0[a] | 8.0[b] | 6.0[a] | 0.048 |

[a,b]Means with different letters within a row differ, $p < 0.05$

CONCLUSIONS

In summary, all the three enzymes numerically showed positive effect on improving the growth performance of post-weaning piglets and reducing the diarrhea rate of piglets. Among these three enzymes, Kemzyme PS achieved the best effect.

**Claims**

1.  A protected $\alpha$-amylase animal feed ingredient resistant to release of the $\alpha$-amylase in the stomach environment of a monogastric animal and susceptible to release of the $\alpha$-amylase in the enteric environment, comprising:

    (a) a core comprising $\alpha$-amylase;
    (b) a first coating comprising from 50% to 85% of a pH-sensitive enteric polymer and from 15% to 50% of excipients ; and
    (c) a second coating comprising from 50% to 85% of a slow-release polymer and from 15% to 50% of excipients .

2.  A feed ingredient as defined in claim 1, wherein the core of $\alpha$-amylase comprises between 50% and 95% $\alpha$-amylase and between 5% and 50% one or more excipients.

3.  A feed ingredient as defined in claim 1 or claim 2, wherein said excipients are selected from the list consisting of microcrystalline cellulose, talc powder, calcium stearate, carboxymethylcellulose sodium, hydroxypropyl methylcellulose, PEG 6000, glycerol, and water.

4.  A feed ingredient as defined in any one of claims 1 to 3, wherein the pH-sensitive polymer comprises 50% - 85% enteric polymethacrylate and 50% - 15% one or more excipients.

5.  A feed ingredient as defined in claim 4, wherein said excipients are selected from the list consisting of talc powder, calcium stearate, PEG 6000, triethyl citrate, and water.

6.  A feed ingredient as defined in any one of the preceding claims, wherein the slow-release polymer comprises 50% - 85% stomach distintegrative polymethacrylate and 50% - 15% one or more excipients.

7.  A feed ingredient as defined in claim 6, wherein said excipients are selected from the list consisting of talc powder, calcium stearate, PEG 6000, carboxymethylcellulose sodium, hypromellose, triethyl citrate, and water.

8.  An animal feed ingredient composition comprising a mixture of an animal feed ingredient as defined in any one of claims 1 to 7 and an unprotected $\alpha$-amylase.

9.  An animal feed ingredient as defined in claim 8, wherein said unprotected $\alpha$-amylase comprises between 0.1% and 20% of said composition.

10. A method of improving the digestion of dietary starch by monogastric animals, comprising feeding the animal a starch-containing feed and the animal feed ingredient of any one of claims 1 to 7.

**Patentansprüche**

1. Geschützter α-Amylase-Tierfutterbestandteil, der gegen die Freisetzung der α-Amylase in der Magenumgebung eines monogastrischen Tieres resistent und für die Freisetzung der α-Amylase in der enterischen Umgebung empfänglich ist, umfassend:

   (a) einen Kern, umfassend α-Amylase;
   (b) eine erste Beschichtung, umfassend 50 % bis 85 % eines pH-empfindlichen enterischen Polymers und 15 % bis 50 % Hilfsstoffe; und
   (c) eine zweite Beschichtung, umfassend 50 % bis 85 % eines Polymers mit langsamer Freisetzung und 15 % bis 50 % Hilfsstoffe.

2. Futterbestandteil nach Anspruch 1, wobei der Kern der α-Amylase zwischen 50 % und 95 % α-Amylase und zwischen 5 % und 50 % eines oder mehrerer Hilfsstoffe umfasst.

3. Futterbestandteil nach Anspruch 1 oder Anspruch 2, wobei die Hilfsstoffe ausgewählt sind aus der Liste bestehend aus mikrokristalliner Cellulose, Talkpulver, Calciumstearat, Carboxymethylcellulose-Natrium, Hydroxypropylmethylcellulose, PEG 6000, Glycerin und Wasser.

4. Futterbestandteil nach einem der Ansprüche 1 bis 3, wobei das pH-empfindliche Polymer 50 %-85 % enterisches Polymethacrylat und 50 %-15 % eines oder mehrerer Hilfsstoffe umfasst.

5. Futterbestandteil nach Anspruch 4, wobei die Hilfsstoffe ausgewählt sind aus der Liste bestehend aus Talkpulver, Calciumstearat, PEG 6000, Triethylcitrat und Wasser.

6. Futterbestandteil nach einem der vorhergehenden Ansprüche, wobei das Polymer mit langsamer Freisetzung 50 %-85 % im Magen zersetzbares Polymethacrylat und 50 %-15 % eines oder mehrerer Hilfsstoffe umfasst.

7. Futterbestandteil nach Anspruch 6, wobei die Hilfsstoffe ausgewählt sind aus der Liste bestehend aus Talkpulver, Calciumstearat, PEG 6000, Carboxymethylcellulose-Natrium, Hypromellose, Triethylcitrat und Wasser.

8. Tierfutterbestandteilzusammensetzung, umfassend eine Mischung eines Tierfutterbestandteils nach einem der Ansprüche 1 bis 7 und einer ungeschützten α-Amylase.

9. Tierfutterbestandteil nach Anspruch 8, wobei die ungeschützte α-Amylase zwischen 0,1 % und 20 % der Zusammensetzung umfasst.

10. Verfahren zur Verbesserung der Verdauung von diätischer Stärke durch monogastrische Tiere, umfassend das Füttern des Tieres mit einem stärkehaltigen Futter und dem Tierfutterbestandteil nach einem der Ansprüche 1 bis 7.

**Revendications**

1. Ingrédient d'aliments pour animaux à α-amylase protégée résistant pour libérer l'α-amylase dans l'environnement de l'estomac d'un animal monogastrique et susceptible de libérer l'a-amylase dans l'environnement entérique, comprenant :

   (a) un noyau comprenant une α-amylase ;
   (b) un premier revêtement comprenant de 50 % à 85 % d'un polymère entérique sensible au pH et de 15 % à 50 % d'excipients ; et
   (c) un deuxième revêtement comprenant de 50 % à 85 % d'un polymère à libération prolongée et de 15 % à 50 % d'excipients.

2. Ingrédient d'aliments tel que défini dans la revendication 1, dans lequel le noyau d'α-amylase comprend entre 50 % et 95 % d'a-amylase et entre 5 % et 50 % d'un ou de plusieurs excipients.

3. Ingrédient d'aliments tel que défini dans la revendication 1 ou la revendication 2, dans lequel lesdits excipients sont choisis parmi la liste constituée par la cellulose microcristalline, la poudre de talc, le stéarate de calcium, la carboxyméthylcellulose sodique, l'hydroxypropylméthylcellulose, le PEG 6 000, le glycérol, et l'eau.

4. Ingrédient d'aliments tel que défini dans l'une quelconque des revendications 1 à 3, dans lequel le polymère sensible au pH comprend de 50 % à 85 % de polyméthacrylate entérique et de 50 % à 15 % d'un ou de plusieurs excipients.

5. Ingrédient d'aliments tel que défini dans la revendication 4, dans lequel lesdits excipients sont choisis parmi la liste constituée par la poudre de talc, le stéarate de calcium, le PEG 6 000, le citrate de triéthyle, et l'eau.

6. Ingrédient d'aliments tel que défini dans l'une quelconque des revendications précédentes, dans lequel le polymère à libération prolongée comprend de 50 % à 85 % de polyméthacrylate capable de désintégration dans l'estomac et de 50 % à 15 % d'un ou de plusieurs excipients.

7. Ingrédient d'aliments tel que défini dans la revendication 6, dans lequel lesdits excipients sont choisis parmi la liste constituée par la poudre de talc, le stéarate de calcium, le PEG 6 000, la carboxyméthylcellulose sodique, l'hypromellose, le citrate de triéthyle, et l'eau.

8. Composition d'ingrédient d'aliments pour animaux comprenant un mélange d'un ingrédient d'aliments pour animaux tel que défini selon l'une quelconque des revendications 1 à 7 et une $\alpha$-amylase non protégée.

9. Ingrédient d'aliments pour animaux tel que défini dans la revendication 8, dans lequel ladite $\alpha$-amylase non protégée constitue entre 0,1 % et 20 % de ladite composition.

10. Procédé d'amélioration de la digestion de l'amidon alimentaire par des animaux monogastriques, comprenant l'alimentation de l'animal avec un aliment contenant de l'amidon et l'ingrédient d'aliments pour animaux selon l'une quelconque des revendications 1 à 7.

FIG. 1

FIG. 2

SEM = 0.48; p = 0.0001

FIG. 3

FIG. 4

FIG. 5

FIG. 6

FIG. 7

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61295444 B
- EP 0286773 A
- CN 1943783
- CA 2263703
- KR 100804096 B
- US 20090004327 A

**Non-patent literature cited in the description**

- **SCOCCA.** *Current Drug Delivery,* 2007, vol. 4, 103-108
- *Nutrient Requirements of Poultry: Nineth Revised Edition,* 1994
- Official Methods of Analysis. 1990